(19) Europäisches Patentamt
European Patent Office
Office européen des brevets

(11) **EP 3 741 022 B1**

(12) **EUROPÄISCHE PATENTSCHRIFT**

(45) Veröffentlichungstag und Bekanntmachung des Hinweises auf die Patenterteilung:
**05.10.2022 Patentblatt 2022/40**

(21) Anmeldenummer: **19710301.3**

(22) Anmeldetag: **22.02.2019**

(51) Internationale Patentklassifikation (IPC):
*H02J 3/16* (2006.01)    *H02J 3/20* (2006.01)
*H02J 3/18* (2006.01)

(52) Gemeinsame Patentklassifikation (CPC):
**H02J 3/16; H02J 3/20;** Y02E 40/30

(86) Internationale Anmeldenummer:
**PCT/EP2019/054465**

(87) Internationale Veröffentlichungsnummer:
**WO 2019/174892 (19.09.2019 Gazette 2019/38)**

(54) **VERFAHREN UND VORRICHTUNG ZUM REGELN EINER ELEKTRISCHEN SPANNUNG**

METHOD AND DEVICE FOR CONTROLLING A VOLTAGE

PROCÉDÉ ET DISPOSITIF DE RÉGULATION D'UNE TENSION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2018 DE 102018203677**

(43) Veröffentlichungstag der Anmeldung:
**25.11.2020 Patentblatt 2020/48**

(73) Patentinhaber: **Siemens Energy Global GmbH & Co. KG**
**81739 München (DE)**

(72) Erfinder:
• **STEINKOHL, Joachim**
**9000 Aalborg (DK)**
• **LOTTES, Jürgen**
**90491 Nürnberg (DE)**
• **VON GEYMÜLLER, Heinrich**
**90443 Nürnberg (DE)**

(56) Entgegenhaltungen:
WO-A1-2011/154052     JP-A- 2005 160 260
US-A- 4 897 593

• Marcio Szechtman: "COORDINATION OF CONTROLS OF MULTIPLE FACTS / HVDC LINKS IN THE SAME SYSTEM", Cigré Technical Brochure Nr. 149, 31. Dezember 1999 (1999-12-31), XP055593876, Gefunden im Internet: URL:https://e-cigre.org/publication/149-coordination-of-controls-of-multiple-factshvdc-links-in-the-same-system [gefunden am 2019-06-04]

**Beschreibung**

Die vorliegende Erfindung betrifft ein Verfahren und eine Vorrichtung zum Regeln einer elektrischen Spannung eines Netzes mittels eines Blindleistungsgeräts. Insbesondere betrifft die vorliegende Erfindung ein Verfahren zur Anpassung der Geschwindigkeit einer Anlage zur Regelung der Spannung im Hochspannungsnetz mittels Kompensation bzw. Einspeisung von Blindleistung und ferner ein Verfahren zur Bestimmung eines Netzkurzschlussequivalents unter Berücksichtigung von anderen FACTS-Anlagen elektrisch nah im Netz.

An verschiedenen Stationen einer Hochspannungsübertragungsleitung eines Hochspannungsnetzes oder an verschiedenen Punkten eines Mittelspannungsnetzes oder an einen Umspannwerk kann es erforderlich sein, Blindleistungsgeräte bzw. Spannungsregelungselemente vorzusehen, welche ausgebildet sind, die Spannung des jeweiligen Netzes bzw. Netzabschnittes auf eine vorbestimmte Spannung zu regeln. Dazu kann es notwendig sein, Blindleistung, d.h. Leistung bei dem Spannung und Strom 90° phasenverschoben sind, in das Netz bzw. den Netzabschnitt einzuspeisen.

Dabei muss ein Regler bzw. eine Regelung eines schnell regelnden Spannungsregelungselements (Sprungantwort eines SVC/SVC PLUS kann z.B. bei 40 ms liegen) seine Einstellwerte (insbesondere Regelungsparameter) an Veränderungen im Energieübertragungsnetz anpassen. Dazu muss der Regler die Kurzschlussleistung des Netzes ermitteln. Wurde die Leistung des Netzes während des Betriebes verringert (starker Lastabfall z.B. nachts), so muss der Regler mit weniger Ausgangsleistung auf eine Regelabweichung reagieren. Wenn somit die Kurzschlussleistung des Netzes kleiner wird, so muss das Spannungsregelelement, insbesondere Blindleistungsgerät, weniger Blindleistung in das Netz abgeben, um die Sollspannung wieder herzustellen, als wenn die Kurzschlussleistung höher ist. Anderenfalls würde der Regler zu schnell (bzw. zu stark) reagieren und es kann zu einem instabilen Verhalten der Anlage kommen, wobei insbesondere Schwingungen angeregt werden können. Steigt hingegen die Leistung des Netzes (z.B. beim Hochfahren großer Kraftwerke), dann muss der Regler stärker auf eine Regelabweichung reagieren als zuvor bei geringerer Leistung, ansonsten würde die Anlage nicht die spezifizierte Einschwingzeit erfüllen. Ist somit die Kurzschlussleistung des Netzes erhöht, dann muss das Spannungsregelelement bzw. das Blindleistungsgerät mehr Blindleistung in das Netz einspeisen, um die Spannung wieder auf die gewünschte Sollspannung zu bringen, als wenn die Kurzschlussleistung geringer ist.

Ferner können in dem Netz weitere Spannungsregelelemente vorhanden sein, welche ihrerseits auf Spannungsschwankungen reagieren. Daher muss der Regler des Spannungsregelungselementes zusätzlich bestimmen, ob noch andere schnell regelnde Spannungsregelelemente in der Nähe auf Spannungsänderung reagieren und insbesondere Blindleistung einspeisen, da diese bei einer Spannungsänderung im Netz ebenfalls versuchen werden, die Spannung zu regeln. Somit können mehrere dynamisch arbeitende Regelanlagen die Spannung des Netzes gleichzeitig verändern. Daher muss nicht jede einzelne Anlage die Spannung auf die gewünschte Sollspannung bringen, sondern nur zu einem gewissen Anteil. Daher muss der Regler weniger schnell (bzw. stark) auf eine Spannungsabweichung reagieren verglichen mit einem Betrieb ohne andere schnell regelnde Spannungsregelelemente.

Herkömmliche Blindleistungskompensationsanlagen können zyklisch wiederholt für eine gewisse Zeit ihre Ausgangsleistung erhöhen und den Einfluss auf die Netzspannung messen. Dabei kann die Veränderung der Ausgangsleistung z.B. für 200 ms erfolgen und der Prozess kann zyklisch wiederholt werden z.B. alle 12 h. Während der Messung der Kurzschlussleistung gemäß dem herkömmlichen Verfahren werden andere Spannungsregelelemente insbesondere Blindleistungskompensationsanlagen für die Zeit des Testes bzw. Messens der Kurzschlussleistung bei ihrem letzten Betriebspunkt eingefroren, so dass die anderen Blindleistungskompensationsanlagen oder allgemein Spannungsregelungsanlagen während des Testes bzw. während der Messung der Kurzschlussleistung keine Regelung durchführen. Dadurch kann der Einfluss der anderen Anlagen auf die Berechnung der Kurzschlussleistung eliminiert werden.

Das herkömmliche Verfahren kann jedoch nur dann angewendet werden, wenn eine Kommunikation mit den anderen Anlagen besteht. Ferner muss in die Regelung der anderen Anlagen eingegriffen werden, insbesondere die Regelung für eine gewisse Zeit zu unterbinden. Außerdem kann das herkömmliche Verfahren nur praktisch implementierbar sein, wenn sich die Anlagen noch im Bau befinden, da die Implementierung dieser Verfahren eines direkten Eingriffs in die Reglerstruktur der Anlage bedarf.

Aus der US 4 897 593 A ist ein Verfahren zum Regeln einer elektrischen Spannung eines Netzes bekannt. Bei dem bekannten Verfahren werden, die zeitliche Änderung der Netzspannung sowie der gelieferten Blindleistung ermittelt, wobei die Verstärkung der Regelung in Abhängigkeit der ermittelten Änderungen angepasst wird.

Somit ist es eine Aufgabe der vorliegenden Erfindung ein Verfahren und eine Vorrichtung zum Regeln einer elektrischen Spannung eines Netzes zu schaffen, wobei die Regelung verbessert wird und das Verfahren einfach zu implementieren ist. Ferner soll ein Kommunikationsaufwand vermindert werden. Auch wird die praktische Realisierbarkeit weitaus einfacher. Die Aufgabe wird durch die Gegenstände der unabhängigen Ansprüche gelöst, welche auf ein Verfahren bzw. auf eine Vorrichtung zum Regeln einer elektrischen Spannung gerichtet sind. Die abhängigen Ansprüche spezifizieren besondere Ausführungsformen der vorliegenden Erfindung.

Gemäß einer Ausführungsform der vorliegenden Erfindung ist bereitgestellt ein Verfahren zum Regeln einer elektrischen Spannung eines Netzes mittels eines Blindleistungsgeräts, das (an einem elektrischen Anschlusspunkt) mit dem Netz verbunden ist, wobei das Verfahren aufweist: Bestimmen einer zeitlichen Änderung einer vorherigen Spannung des Netzes (z.B. an dem Anschlusspunkt); Bestimmen einer zeitlichen Änderung einer von dem Blindleistungsgerät vorherig in das Netz abgegebenen Blindleistung; und nachfolgend: Abgeben, von dem Blindleistungsgerät, einer Blindleistung in das Netz, die in Abhängigkeit der zeitlichen Änderungen bestimmt ist.

Bei dem Netz kann es sich um ein Hochspannungsnetz, ein Mittelspannungsnetz oder ein Niederspannungsnetz handeln. Das Netz kann ein dreiphasiges Wechselspannungsnetz sein. Das Blindleistungsgerät kann zum Erzeugen und/oder Absorbieren von Blindleistung in bzw. aus dem Netz ausgebildet sein. Blindleistung (z.B. kapazitive oder induktive) bedeutet eine Leistung, bei der Strom und Spannung um 90° phasenverschoben sind. Das Verfahren kann ausgebildet sein, die elektrische Spannung des Netzes auf eine Sollspannung des Netzes zu regeln. Wenn z.B. die elektrische Spannung des Netzes geringer ist als die Sollspannung, kann das Blindleistungsgerät veranlasst werden, (insbesondere kapazitive) Blindleistung in das Netz einzuspeisen, wobei z.B. kapazitive Blindleistung eingespeist wird, bei der der Strom der Spannung um 90° vorauseilt.

Es können z.B. mindestens zwei vorherige Spannungen (d.h. zu verschiedenen vorherigen Zeitpunkten im Netz vorhandene Spannungen) durch Spannungsmessung bestimmt werden z.B. einer Phase, zweier Phasen oder aller drei Phasen. Insbesondere können mehrere vorherige Spannungen in bestimmten Zeitintervallen oder in einem bestimmten Zeitintervall abgetastet werden. Die zeitliche Änderung der vorherigen Spannung kann dann als eine Differenz von zwei vorherigen Spannungen bestimmt werden, die zu unterschiedlichen Zeitpunkten gemessen wurden, wobei sich die Zeitpunkte z.B. um etwa 1 ms unterscheiden können.

Bei dem Blindleistungsgerät kann es sich um ein Gerät oder Anlage handeln, insbesondere Blindleistungskompensationsanlage, das in der Lage ist Blindleistung zu erzeugen und/oder zu absorbieren.

Die von dem Blindleistungsgerät vorherig in das Netz abgegebene Blindleistung kann zu denselben Zeitpunkten bestimmt werden, die zur Bestimmung der vorherigen Spannungen verwendet wurden. Die zeitliche Änderung der vorherig in das Netz abgegebenen Blindleitung kann ebenfalls als eine Differenz von zwei vorherig abgegebenen und gemessenen Blindleistungen berechnet werden, welche sich auf zwei unterschiedliche vorherige Zeitpunkte beziehen.

Während des Verfahrens muss von dem Blindleistungsgerät nicht notwendigerweise für eine bestimmte Zeit bzw. für eine bestimmte Zeitdauer eine veränderte Blindleistung nur zu dem Zweck ausgegeben werden, um eine Kurzschlussleistung des Netzes zu bestimmen. Stattdessen kann das Verfahren während eines normalen Regelbetriebs des Blindleistungsgeräts bzw. eines Reglers des Blindleistungsgeräts durchgeführt werden. Dabei kann die Regelung gemäß einem normalen Betrieb des Blindleistungsgeräts ausgeführt werden, wobei z.B. eine Differenz der elektrischen Spannung und der Sollspannung einem Regler, z.B. PI-Regler, zugeführt wird, welcher daraus einen Referenzwert einer Blindleistung errechnet, welcher dem Blindleistungsgerät zugeführt wird, woraufhin das Blindleistungsgerät die entsprechende Blindleistung in das Netz einspeist derart, dass die Fehlerdifferenz zwischen der elektrischen Spannung des Netzes und der Sollspannung vermindert wird, insbesondere auf null geregelt wird.

Die Blindleistung, welche von dem Blindleistungsgerät in das Netz abgegeben wird, wird zu einem Zeitpunkt abgegeben, welcher zeitlich nach der vorherigen Spannung, die bei einem vorherigen Zeitpunkt gemessen ist, und nach der vorherig in das Netz abgegebene Blindleistung liegt, die bei einer vorherigen Zeit abgegeben wurde. Somit kann aus den zeitlichen Änderungen der Spannung des Netzes und der in das Netz abgegebenen Blindleistung bei vorherigen Zeitpunkten die Blindleistung bestimmt werden, welche zu einem späteren Zeitpunkt in das Netz einzuspeisen ist, um einer etwaigen Abweichung der Spannung von der Sollspannung entgegenzuwirken.

Während des Verfahrens müssen andere elektrisch nahegelegene Regeleinrichtungen, insbesondere Blindleistungskompensationseinrichtungen, nicht hinsichtlich ihrer Regelung abgeschaltet werden bzw. eingefroren werden. Damit ist eine Kommunikation mit anderen Regelungsanlagen während des Verfahrens nicht erforderlich.

Gemäß einer Ausführungsform der vorliegenden Erfindung ist das Verfahren derart ausgestaltet, dass das Abgeben der von dem Blindleistungsgerät nachfolgend abgegebenen Blindleistung aufweist: Einstellen mindestens eines Reglerparameters, insbesondere Reglerverstärkung, eines Reglers des Blindleistungsgeräts in Abhängigkeit der zeitlichen Änderungen, wobei der Regler eine Abweichung der vorherigen Spannung des Netzes von einem Sollwert als Eingabe erhält; Ausgeben, von dem Regler, eines Stellwertes der Blindleistung an einen Konverter des Blindleistungsgeräts; Erzeugen der Blindleistung durch den Konverter und Einspeisen in das Netz.

Die Blindleistung wird abgegeben, nachdem die zeitlichen Änderungen der Spannung des Netzes und der abgegebenen Blindleistung bei vorherigen Zeitpunkten bestimmt worden sind.

Bei dem Regler kann es sich z.B. um einen PID-Regler handeln, wobei ein Integrationszweig, ein Proportionalzweig und ein Differentialzweig mit jeweiligen Parametern vorhanden sein können. Die Blindleistung kann z.B. in Abhängigkeit davon bestimmt werden, ob die zeitlichen Änderungen bestimmte Schwellwerte übersteigen und/oder ob die zeitlichen Änderungen ein gleiches oder ein unterschiedliches Vorzeichen aufweisen. Der Konverter kann selbst eine Energieversorgung aufweisen und ausgebildet sein, eine gewünschte Blindleistung mit gewünschter Spannung und Frequenz an das Netz abzugeben. Dazu kann eine Thyristor-gesteuerte Drossel und ein Kondensator (SVC Classic) oder ein Konverter mittels Leistungselektronik angesteuert (SVC PLUS) eingesetzt werden. Das Verfahren hängt aber nicht vom eingesetzten Blindleistungskompensationstyp ab und kann allgemein bei Anlagen eingesetzt werden, die eine schnelle Spannungsregelung (im Bereich von 100ms) breitstellen. Es kann ein Multi-Level-Konverter zur Anwendung kommen. Der Regler des Blindleistungsgerätes gibt den Stellwert der Blindleistung an den Konverter aus, welcher insbesondere über eine Treiberschaltung verfügen kann, welche basierend auf dem Stellwert der Blindleistung Pulsbreitemodulationssignale erzeugt, die den Gates der Leistungstransistoren zugeführt werden können. Die Leistungstransistoren können zwischen verschiedenen Phasen des Blindleistungsgeräts vorgesehen sein, wie es aus dem Stand der Technik bekannt ist. Somit unterstützt das Verfahren auch herkömmlich verfügbare elektronische Komponenten.

Die Reglerverstärkung kann der Reglergeschwindigkeit entsprechen. Die Reglergeschwindigkeit kann optimal in dem Sinne eingestellt werden, dass die Geschwindigkeit immer bestimmte Bedingungen erfüllt. Das sind z.B.: 90% eines Sollwertsprunges werden in 40 ms erreicht bei einem maximalen overshoot von 10%. Damit kann die Geschwindigkeit eines Reglers gemessen oder definiert werden.

Gemäß einer Ausführungsform der vorliegenden Erfindung weist das Einstellen mindestens eines Reglerparameters auf: Bestimmen einer vorherigen Kurzschlussleistung des Netzes in Abhängigkeit der zeitlichen Änderungen; und Bestimmen des Reglerparameters basierend auf der bestimmten vorherigen Kurzschlussleistung. Dabei kann z.B. die Geschwindigkeit des Reglers angepasst werden. Dabei können zwei Faktoren beachtet werden, und zwar das Kurzschlusslevel im Netz und der Einfluss anderer Spannungsregler im Netz (z. B. andere Blindleistungskompensationsanlagen).

Die vorherige Kurzschlussleistung kann als diejenige Kurzschlussleistung verstanden werden, welche zu den vorherigen Zeitpunkten vorlag, zu denen auch die Spannung und die Blindleistung bestimmt wurden bzw. deren zeitliche Änderung bestimmt wurden. Die Kurzschlussleistung kann z.B. durch ein Verhältnis der Netzspannung und der Blindleistung bestimmt werden. Hier kann eine Näherung zwischen der Änderung der Blindleistung und der Änderung der Spannung genutzt werden, um die Netzkurzschlusssleistung anzunähern. Theoretisch kann sich die Netzkurzschlussleistung aus der aktuellen Netzimpedanz und der aktuellen Systemspannung an den Quellen im Netz ergeben. Der mathematische Zusammenhang zwischen Netzspannungsänderung und Blindleistungsänderung kann eine Näherung sein. Wenn die beiden Größen dynamisch (schnell alle ca. 1 ms) berechnet werden, kann eine Reglerverstärkung ermittelt werden, die sowohl die aktuelle Netzkurzschlussleistung als auch den Einfluss andere Anlagen berücksichtigt. Das bedeutet, dass beide Faktoren das Messergebnis beeinflussen.

Gemäß einer Ausführungsform der vorliegenden Erfindung ist das Verfahren derart ausgebildet, dass die vorherige Kurzschlussleistung des Netzes in Abhängigkeit eines jeweiligen Betrages und/oder eines Vorzeichens der vorherigen zeitlichen Änderungen der Spannung des Netzes und der vorherigen zeitlichen Änderung der von dem Blindleistungsgerät abgegebenen Blindleistung und insbesondere basierend auf einer weiter vorherig bestimmten Kurzschlussleistung des Netzes bestimmt wird.

Es kann entscheidend sein, dass auf Grund des Vergleichs der Vorzeichen der Blindleistungsänderung (hier ist Induktiv als negativ definiert) und der Spannungsänderung (negativ bedeutet, dass die Spannung kleiner wird) bestimmt werden kann, ob der SVC (allgemein das Blindleistungsgerät) selbst an der Spannungsänderung beteiligt ist. Wenn dies nicht der Fall ist, dann können die Messwerte verworfen werden, da in diesem Fall kein Zusammenhang zwischen eigener Einspeisung bzw. Aufnahme von Blindleistung und der Netzspannung hergestellt werden kann.

Wenn z.B. der Betrag der zeitlichen Änderung der Spannung oder der Blindleistung kleiner ist als jeweilige Schwellwerte, so kann eine derartige Messung verworfen werden, da die gemessenen Werte auf Störungen oder Rauschen zurückgeführt werden können. Die weiter vorherig bestimmte Kurzschlussleistung bezieht sich auf eine Kurzschlussleistung, die zeitlich vor den vorherigen Zeitpunkten liegt. Wird z.B. eine Messung der zeitlichen Änderung der Spannung und der Blindleistung aufgrund eines zu geringen Betrages verworfen, so kann die vorherige Kurzschlussleistung mit der weiter vorherig bestimmten Kurzschlussleistung gleichgesetzt werden. Dasselbe kann vorgenommen werden, falls die zeitliche Änderung der Spannung ein anderes Vorzeichen hat als die zeitliche Änderung der Blindleistung. Damit kann eine stabile Steuerung bzw. Regelung der elektrischen Spannung ermöglicht werden.

Gemäß der vorliegenden Erfindung ist das Verfahren derart ausgebildet, dass die vorherige Kurzschlussleistung des Netzes in Abhängigkeit eines vorherigen Verhältnisses der vorherigen zeitlichen Änderungen der Spannung des Netzes und der vorherigen zeitlichen Änderung der von dem Blindleistungsgerät abgegebenen Blindleistung gemäß einer Bestimmungslogik bestimmt wird, die insbesondere aufgrund einer Simulation bestimmt ist.

Die Parameter für die Reglerverstärkung können (vorab) anhand eines Echtzeitsimulators mit echten Netzdaten bestimmt werden bzw. worden sein. Weiterhin können Tests am echten Netz durchgeführt werden oder worden sein, welche zeigen, dass die Werte im richtigen Bereich liegen.

Das vorherige Verhältnis ist ein Bruch zwischen der vorherigen Änderung der Spannung und der Änderung der vorherigen ins Netz abgegebenen Blindleistung, bezieht sich somit auf die vorherige Zeit bzw. die vorherigen Zeiten, bei denen die Änderungen der vorherigen Spannung bzw. der vorherig in das Netz abgegebenen Blindleistung bestimmt wurden. Die Bestimmungslogik kann z.B. den Betrag und/oder das Vorzeichen der vorherigen zeitlichen Änderungen aufweisen und miteinander in Beziehung setzen bzw. miteinander verrechnen, ohne selbst das vorherige Verhältnis der zeitlichen Änderungen zu umfassen. Die Bestimmungslogik kann z.B. eine Abfrage bzw. einen Entscheidungselement umfassen, welches abfragt, ob die Beträge der Spannung und der Blindleistung gewisse Schwellwerte übersteigen oder nicht. Eine weitere Abfrage bzw. ein weiteres Entscheidungselement kann abfragen, ob die Vorzeichen der zeitlichen Änderungen gleich oder verschieden sind. Damit kann eine einfache Implementierung des Verfahrens bereitgestellt werden.

Gemäß der vorliegenden Erfindung umfasst die Bestimmungslogik ein Gewichten des vorherigen Verhältnisses relativ zu der weiter vorherigen Kurzschlussleistung umso höher, je größer zumindest einer der Beträge der zeitlichen Änderungen der vorherigen Spannung des Netzes und/oder der zeitlichen Änderung der von dem Blindleistungsgerät vorherig abgegebenen Blindleistung ist und/oder Verwenden des vorherigen Verhältnisses oder des gewichteten vorherigen Verhältnisses zur Bestimmung der vorherigen Kurzschlussleistung, wenn ein Betrag der zeitlichen Änderungen der vorherigen Spannung des Netzes und/oder der zeitlichen Änderung der von dem Blindleistungsgerät vorherig abgegebenen Blindleistung größer als ein jeweiliger Schwellwert ist und/oder wenn ein Vorzeichen der zeitlichen Änderung der vorherigen Spannung des Netzes und ein Vorzeichen der zeitlichen Änderung der von dem Blindleistungsgerät vorherig abgegebenen Blindleistung gleich sind, wobei die von dem Blindleistungsgerät abgegebene Blindleistung ansteigend gewertet wird, wenn ansteigende kapazitive Blindleistung eingespeist wird.

Somit kann das vorherige Verhältnis mit der weiter vorherig bestimmten Kurzschlussleistung kombiniert werden, insbesondere in gewichteter Weise je nach Größe der Beträge der zeitlichen Änderungen. Der Gewichtungsfaktor kann basierend auf geeigneten Simulationen eingestellt werden. Der Gewichtungsfaktor kann insbesondere in Abhängigkeit des Betrages der zeitlichen Ableitungen bestimmt sein, wobei der Gewichtungsfaktor höher ist, je höher zumindest einer der Beträge der zeitlichen Änderungen ist.

In einer Ausführungsform der vorliegenden Erfindung ist das Verfahren derart ausgebildet, dass die vorherige Kurzschlussleistung KSL_vorher bestimmt ist, wenn $\Delta Q/\Delta V > 0$ ist, gemäß:

```
KSL_vorher = ((1 - w) * KSL_weiter-vorher + w *
ΔQ_vorher/ΔV_vorher)/2
```

wobei:

$\Delta V\_vorher$ die Änderung der vorherigen Spannung des Netzes $\Delta Q\_vorher$ die zeitliche Änderung der von dem Blindleistungsgerät vorherig abgegebenen Blindleistung KSL_vorher die vorherige Kurzschlussleistung des Netzes KSL_weiter-vorher die weiter vorherige Kurzschlussleistung des Netzes (d.h. noch vor der vorherigen Kurzschlussleistung des Netzes vorhandene Kurzschlussleistung) und
w ein Gewichtungsfaktor zwischen null und eins ist.

Damit kann eine einfache Bestimmung der vorherigen Kurzschlussleistung realisiert werden und in einfacher Weise implementiert werden.

Gemäß einer Ausführungsform der vorliegenden Erfindung ist das Verfahren derart ausgebildet, dass $\Delta Q0$, $\Delta V0$ Schwellwerte sind und

w = 0 ist, falls $\Delta V < \Delta V0$ und/oder $\Delta Q < \Delta Q0$

w = 1 ist, falls $\Delta V >= \Delta V0$ und/oder $\Delta Q >= \Delta Q0$

oder

wobei w proportional zu $(\Delta Q - \Delta Q0)$ ist.

Andere Verfahren zur Bestimmung des Gewichtungsfaktors w können vorgesehen sein.

Gemäß einer Ausführungsform der vorliegenden Erfindung ist das Verfahren derart ausgebildet, dass die zeitlichen Änderungen in einem Zeitintervall bestimmt werden, das zwischen 100 µs und 10 ms, insbesondere zwischen 500 µs und 5 ms, liegt, wobei das Verfahren kontinuierlich oder zyklisch wiederholt wird.

Herkömmliche Verfahren können eine Reaktionszeit von etwa 300 ms aufweisen. Gemäß einer Ausführungsform der vorliegenden Erfindung werden eine Kurzschlussleistung des Netzes zyklisch, z.B. zwischen 100 µs bis 10 ms zeitlich beabstandet, bestimmt und daraufhin die nachfolgend abzugebende Blindleistung bestimmt und tatsächlich in das Netz abgegeben. Somit kann das Verfahren sehr schnell die Geschwindigkeit der Spannungsregelung auf die Verhältnisse im Netz anpassen, insbesondere schneller als andere Anlagen, welche auch zur Spannungsregelung im Netz örtlich benachbart vorhanden sein könnten. Dadurch kann inhärent erreicht werden, dass der Einfluss anderer Anlagen im Netz in der Reglerverstärkung für die Spannungsregelung mit berücksichtigt werden kann.

Gemäß einer Ausführungsform der vorliegenden Erfindung ist eine Vorrichtung zum Regeln einer elektrischen Spannung eines Netzes bereitgestellt, wobei die Vorrichtung aufweist: eine Steuerung, die ausgebildet ist, eine zeitliche Änderung einer vorherigen Spannung des Netzes zu bestimmen und eine zeitliche Änderung einer von dem Blindleistungsgerät vorherig in das Netz abgegebenen Blindleistung zu bestimmen; und ein Blindleistungsgerät, das mit dem Netz verbindbar ist und ausgebildet ist, eine Blindleistung in das Netz abzugeben, die in Abhängigkeit der zeitlichen Änderungen bestimmt ist.

Um die aktuelle Netzkurzschlussleistung inklusive des Einflusses anderer schneller Spannungsregler gezielt zu einem bestimmten Zeitpunkt zu messen, kann das beschriebene Verfahren ergänzt werden. Dazu kann für eine bestimmte Zeit (z. B. 300 ms) ein fester Sprung auf den Blindleistungssollwert der Anlage addiert werden, ohne dass der Spannungsregler angehalten wird. Dies kann eine Änderung in der Netzkonfiguration (z.B. das Schalten einer statischen Kondensatorbank die kapazitive Blindleistung ins Netz einspeist, wenn zugeschaltet) simulieren. Die Reaktion des Reglers und der anderen Spannungsregler im Netz kann dann wieder entsprechend dem beschriebenen Verfahren genutzt werden, um die Reglerverstärkung auf die aktuellen Netzparameter anzupassen.

Es wird darauf hingewiesen, dass Merkmale, welche individuell oder in irgendeiner Kombination im Zusammenhang mit einem Verfahren zum Regeln einer elektrischen Spannung eines Netzes offenbart, erläutert oder vorgesehen sind, auch, individuell oder in irgendeiner Kombination auf eine Vorrichtung zum Regeln einer elektrischen Spannung eines Netzes angewendet werden können, gemäß Ausführungsformen der vorliegenden Erfindung, und umgekehrt.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.

Fig. 1 illustriert schematisch eine Vorrichtung zum Regeln einer elektrischen Spannung gemäß einer Ausführungsform der vorliegenden Erfindung;

Figuren 2 bis 8 illustrieren Graphen von elektrischen Größen, welche gemäß Ausführungsform der vorliegenden Erfindung bestimmt, betrachtet oder eingestellt werden;

Figuren 9 bis 15 illustrieren Graphen von elektrischen Größen, welche gemäß Ausführungsform der vorliegenden Erfindung bestimmt, betrachtet oder eingestellt werden;

Figuren 16 bis 22 illustrieren Graphen von elektrischen Größen, welche gemäß Ausführungsform der vorliegenden Erfindung bestimmt, betrachtet oder eingestellt werden;

Figuren 23 bis 27 illustrieren Graphen von elektrischen Größen, welche gemäß Ausführungsform der vorliegenden Erfindung bestimmt, betrachtet oder eingestellt werden;

Fig. 28 und Fig. 29 illustrieren Graphen von ausgegebener Blindleistung bzw. Netzspannung, welche gemäß Ausführungsformen betrachtet bzw. eingestellt werden.

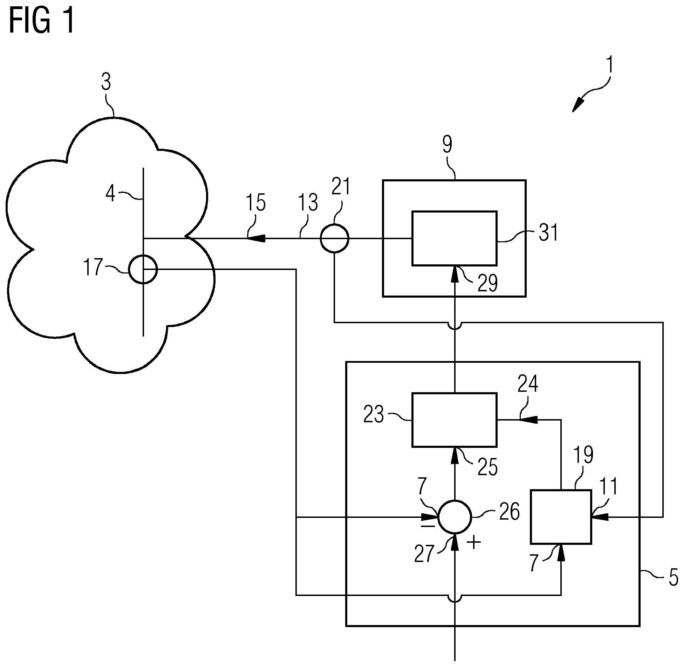

Die in Fig. 1 schematisch illustrierte Vorrichtung 1 zum Regeln einer elektrischen Spannung eines Netzes 3 gemäß einer Ausführungsform der vorliegenden Erfindung weist eine Steuerung 5 auf, welche ausgebildet ist, eine zeitliche Änderung einer vorherigen Spannung 7 des Netzes 3 zu bestimmen und eine zeitliche Änderung einer von einem Blindleistungsgerät 9 vorherig in das Netz 3 abgegebenen Blindleistung als Messwert 11 zu bestimmen. Ferner weist die Vorrichtung 1 das Blindleistungsgerät 9 auf, welches mit dem Netz 3 verbindbar ist und insbesondere über eine Leitung 13 verbunden ist und ausgebildet ist, eine Blindleistung 15 über die Anschlussleitung 13 in das Netz abzugeben, die in Abhängigkeit von zeitlichen Änderungen der vorherigen Spannung 7 und der vorherig in das Netz 3 abgegebenen Blindleistung 11 bestimmt ist.

Insbesondere ist die Vorrichtung 1 ausgebildet, ein Verfahren zum Regeln einer elektrischen Spannung eines Netzes mittels eines Blindleistungsgeräts gemäß einer Ausführungsform der vorliegenden Erfindung auszuführen. Über ein Messgerät bzw. einen Messsensor 17 wird die Spannung 7 des Netzes zu mehreren vorherigen Zeitpunkten gemessen, insbesondere mit einer Abtastrate zwischen 10 μs und 10 ms. Aus mehreren vorherig gemessenen Spannungen 7 ermittelt die Steuerung 5, insbesondere ein Bestimmungsmodul 19 die zeitliche Änderung der vorherigen Spannung 7 des Netzes 3. Über einen weiteren Messfühler bzw. Messgerät 21 wird auch die von dem Blindleistungsgerät 9 in das Netz 3 abgegebene Blindleistung bzw. vorherige Blindleistung zu mehreren vorherigen Zeitpunkten gemessen und dem Modul 19 der Steuerung 5 als Messwert 11 zugeführt. Basierend auf den zeitlichen Änderungen bestimmt das Modul 19 mindestens einen Reglerparameter des Reglers 23 und führt dem Regler 23, z.B. ein PID-Regler, diesen mindestens einen Regelparameter über ein Signal 24 zu.

Als Eingabe erhält der Regler 23 eine Abweichung 25 zwischen einer Sollspannung 27 (welche z.B. von außen zugeführt wird oder in der Steuerung 5 in einem Speicher abgelegt sein kann) und der vorherigen Spannung 7 des Netzes 3, wobei die Abweichung 25 mittels eines Differenzgliedes 26 bestimmt wird. Basierend auf der Abweichung 25 berechnet der Regler 23 einen Referenzwert 29 für eine Blindleistung und führt diesen Referenzwert einem Konverter 31 des Blindleistungsgeräts 9 zu. Der Konverter 31 kann ferner eine Gate-Treiberschaltung umfassen, welche basierend auf dem Referenzwert 29 für die Blindleistung Gate-Treibersignale für Leistungstransistoren erzeugt.

In anderen Ausführungsformen kann eine thyristorgesteuerte Anlage zur Anwendung kommen, die einen Thyristor-Stack mit dahinter geschalteter Induktivität (eine große) bzw. einer Kondensatorbank (SVC Classic Technik) umfassen kann.

Durch geeignetes Ansteuern von Leistungstransistoren und/oder -thyristoren kann der Konverter 31 eine Blindleistung 15 erzeugen und in das Netz abgegeben, welche gemäß dem Referenzwert 29 der Blindleistung definiert ist. Die angeforderte Blindleistung kann im Bereich von Millisekunden bereitgestellt werden kann.

Das Netz 3 kann z.B. eine Übertragungsleitung 4 umfassen, beispielsweise eine Hochspannungsübertragungsleitung. Die Vorrichtung 1 kann an verschiedenen Punkten innerhalb des Netzes 3 angeordnet sein, um in verschiedenen Bereichen des Netzes 3 eine Spannungsregelung vornehmen zu können.

Die in Fig. 1 illustrierte und gemäß Ausführungsform der vorliegenden Erfindung vorgeschlagene Regelstruktur kann passiv arbeiten, wobei, während der Bestimmung der Kurzschlussleistung des Netzes, ein aktives Verändern der Ausgangsleistung (z.B. Ausgangsblindleistung 15) nicht mehr nötig ist, aber immer noch möglich ist. Die gemessenen Netzspannung 7 und die gemessene Leistung 11 des Betriebsmittels (Strom, Leistung oder Blindleistung) der Anlage können differenziert werden (um eine Änderung pro Zeiteinheit zu bestimmen). Das Verhältnis dieser beiden zeitlichen Änderungen kann als ein Maß für die Kurzschlussleistung des Energieübertragungsnetzes (z.B. Netz 3) herangezogen werden. Die so berechnete Kurzschlussleitung kann unter bestimmten Kriterien verwendet werden, jedoch unter bestimmten Bedingungen auch verworfen werden. Dafür kann eine Entscheidungslogik bzw. Berechnungslogik gemäß Ausführungsform der vorliegenden Erfindung verwendet werden. Andere Möglichkeiten sind auch umsetzbar.

Gemäß Ausführungsformen der vorliegenden Erfindung kann die Entscheidungs- bzw. Bestimmungsalgorithmik zwei Kriterien umfassen:

Das erste Kriterium berücksichtigt den Betrag der beiden Ableitungen, d.h. der Ableitung der Spannung 7 des Netzes und der Leistung 11, welche von dem Blindleistungsgerät 9 in das Netz abgegeben wird bzw. wurde. Dabei wird gemäß der Berechnungsalgorithmik bzw. -logik (insbesondere Fuzzy-Logik) entschieden, ob die Ausgangsleistungsänderung durch die Änderungsspannungsänderung verursacht ist. Wenn die Ausgangsleistung einer Blindleistungskompensationsanlage mehr kapazitiv wird, so muss die Netzspannung steigen. Wird die Ausgangsleistung induktiver, so muss die Netzspannung sinken. Dabei kann bzw. braucht gemäß einer Ausführungsform der vorliegenden Erfindung nur die Änderungsrichtung entscheidend sein, nicht jedoch der absolute Wert der Ausgangsleistung.

Gemäß einer Ausführungsform der vorliegenden Erfindung wird zur Festlegung dieser beiden Kriterien eine Fuzzy-Logik verwendet. Die Eingangswerte sind die Leistungsänderung (zeitliche Änderung der Spannung bzw. der abgegebenen Leistung 15 bzw. des daraus resultierenden Messwertes 11) und die Spannungsänderung im Netz (d.h. die zeitliche Änderung der Netzspannung 7). Diese werden dann auf Formeln angewendet, die aussagen, ob der Eingangswert steigt, oder ob er sinkt und ob der Betrag signifikant größer als null ist, oder nicht. Diese Werte können dann anschließend miteinander kombiniert werden. Damit kann eine Zahl zwischen null und eins erhalten werden, welche als ein Gewichtungsfaktor angesehen werden kann. Ein Gewichtungsfaktor von 1 kann anzeigen, dass der so berechnete Kurzschlusswert des Netzes übernommen wird. Ein Gewichtungswert von 0 kann anzeigen, den berechneten Kurzschlusswert nicht zu übernehmen, d.h. zu verwerfen. Dazwischen, insbesondere wenn der Gewichtungsfaktor zwischen 0 und 1 liegt, kann der Kurzschlusswert anteilsmäßig mit dem noch weiter vorher bestimmten Kurzschlusswert berechnet werden und ein gewichteter Mischwert kann abgespeichert werden und ferner zur Spannungsregelung verwendet werden. Für diese Auswahllogik können auch andere Möglichkeiten bzw. Implementierungen herangezogen werden.

Dabei muss bzw. kann die Logik den Regler-Ausgang immer überwachen. Nur in diesem Fall macht es Sinn, den vorherigen berechneten Wert zu berücksichtigen. Denn durch das ständige Überwachen und Triggern der fuzzylogik kann im Vergleich zu einem herkömmlichen Verfahren, in dem der Regler angehalten werden muss, eine viel größere Anzahl an Messwerten generiert werden und somit die Qualität der Messung sukzessiv verbessert werden. Gerade die Berücksichtigung der vorherigen Messwerte kann ermöglichen, dass mehrere Messungen kombiniert werden können. Bei herkömmlichen Verfahren hingegen erfolgt nur ca. alle 12 Stunden eine Messung, da es ungewünscht ist, den Regler oft anzuhalten, da dadurch die Verfügbarkeit der Anlage sinken würde.

Jede andere Verschaltung der Eingangsparameter nach den oben beschriebenen zwei Kriterien ist möglich, um zu dieser Lösung des Problems zu kommen. Die Auswahllogik kann auch um andere Parameter erweitert werden. So kann der Kurzschlussleistungswert auch verworfen werden, wenn es einen Überschlag im Energieübertragungsnetz gibt und somit die Netzspannung stark verändert wird. Besonders der Spannungsanstieg bei der Klärung eines Netzfehlers ist nicht durch die Anlage verursacht und ist daher nicht zu verwenden, gemäß Ausführungsform der vorliegenden Erfindung. Insbesondere kann das Verfahren in diesem Fall besondere Vorteile bieten und gut funktionieren.

Um zu jedem Zeitpunkt die aktuell beste Reglerverstärkung einstellen zu können, ohne dass eine Veränderung im Netz stattgefunden hat, kann, unabhängig von anderen Komponenten im Netz, eine Veränderung im Netz simuliert werden. Dazu kann temporär ein Sprung in der Blindleistung des eigenen Konverters erzeugt werden. Dieser Sprung kann im Netz wie eine Veränderung durch ein geschaltetes Element wirken. Dabei kann das eigene Messsystem getriggert werden, die Reglerverstärkung neu zu berechnen und einzustellen.

Mit dieser Lösung kann zu jedem Zeitpunkt das aktuelle Netzkurzschlussleistungsäquivalent, mit Einberechnung des Einflusses anderer schneller Spannungsregler, bestimmt werden. Ein solcher aktiver Netztest kann zu jedem Zeitpunkt angestoßen werden.

Auch eine Kombination aus einem herkömmlichen Verfahren und den in Ausführungsformen der vorliegenden Erfindung illustrierten Verfahren kann vorgenommen werden. Damit kann man die Kurzschlussleistung (insbesondere Netzkurzschlussequivalent) des Energieübertragungsnetzes bestimmen und auf andere dynamische Spannungsregelelemente korrekt reagieren.

Gemäß Ausführungsform der vorliegenden Erfindung werden die zeitlichen Änderungen in der Netzspannung und die zeitliche Änderung der Ausgangsleistung verwendet und Auswahlkriterien und eine Logik verwendet, um eine Regelung vorzunehmen.

Ein herkömmlich durchgeführtes Verändern der Ausgangsleistung, um eine Kurschlussleistung des Netzes zu bestimmen, ist gemäß dem vorliegend beschriebenen Verfahren nicht notwendig, kann aber optional zusätzlich durchgeführt werden. Die Berechnung wie beschrieben ist aber nicht mehr auf wenige zyklische Messungen beschränkt, sondern kann im Wesentlichen auch kontinuierlich erfolgen, d.h. insbesondere in jedem Taktzyklus. Dies kann von Vorteil bei einer sehr großen Änderung der Kurzschlussleistung innerhalb einer kurzen Zeit sein (z.B. bei einem Teilverlust des Stromnetzes), da der Regler sofort eine neue Kurzschlussleistung berechnet und somit nicht erst eine gewisse Dauer gewartet werden muss, bis ein zyklischer Test durchgeführt wird oder das System instabil wird. Außerdem kann der Einfluss anderer dynamischer Spannungsregelelemente mit berücksichtigt werden. Das vorgeschlagene Verfahren kann einen niedrigeren Kurzschlussleistungswert des Netzes ermitteln und somit weniger auf eine Spannungsänderung reagieren, wenn ein anderes dynamisches Spannungsregelelement elektrisch nahe ist und zur Regelung beiträgt. Damit kann auch in diesem Fall ein stabiles Regelverhalten erreicht werden.

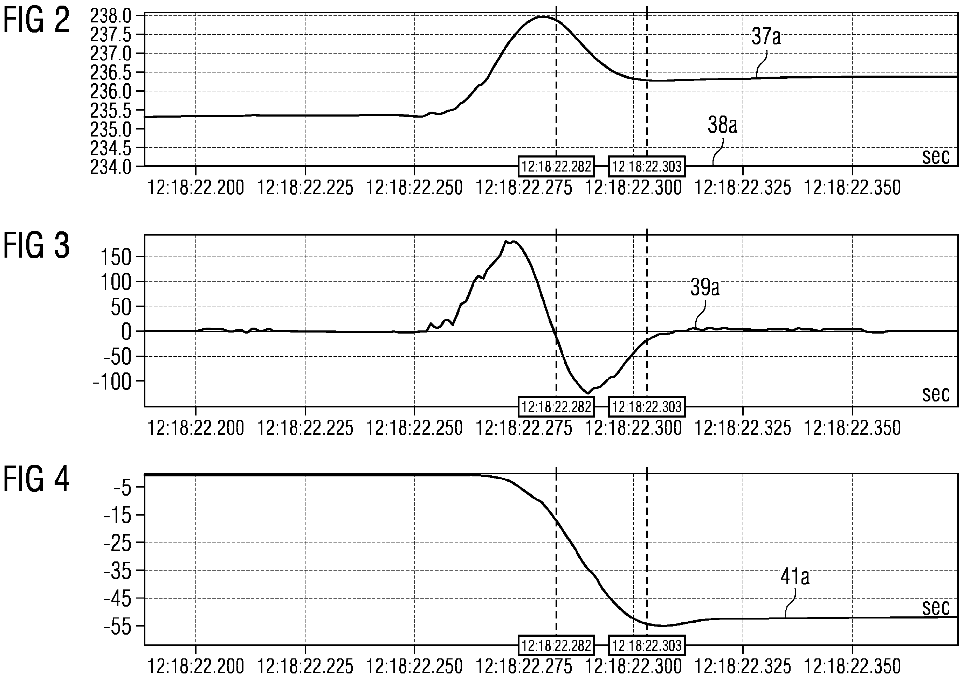

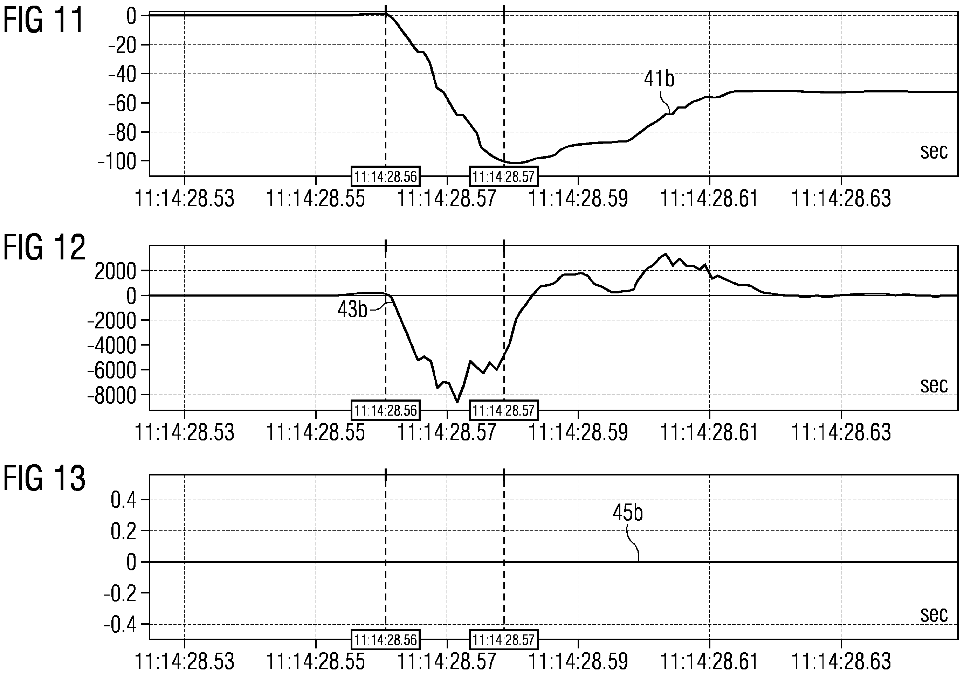

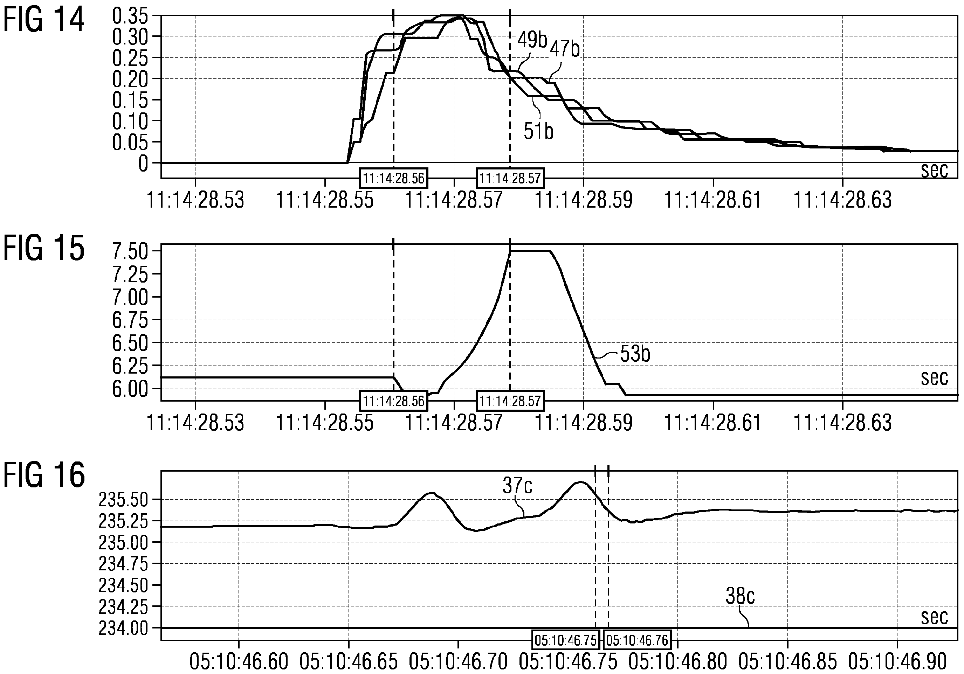

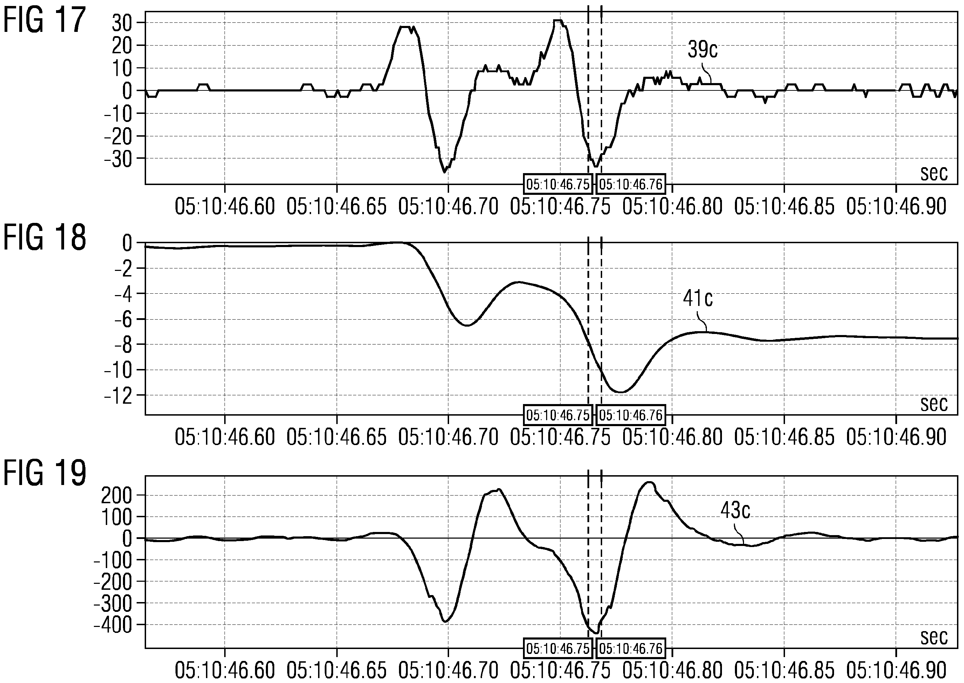

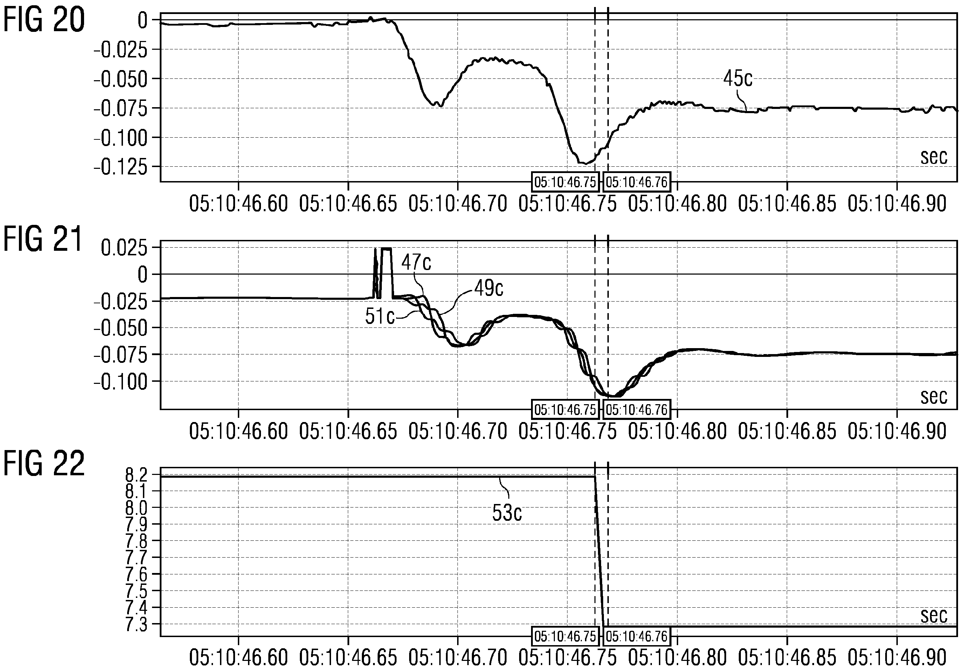

In den Fign. 2 bis 8, 9 bis 15 bzw. 16 bis 22 sind jeweils Graphen illustriert, welche die Netzspannung 7, die zeitliche Ableitung der Netzspannung 7, die Ausgabeleistung 15 (bzw. der Messwert 11), die zeitliche Ableitung der Ausgabeleistung 15, den Regelstrom, die einzelnen Phasenströme bzw. einen Systemfaktor illustrieren, wie die gemäß Ausführungsformen der vorliegenden Erfindung betrachtet, definiert oder eingestellt wurden. Alle Graphen haben als Abszisse eine Zeitachse und als Ordinate die Größe des elektrischen Parameters.

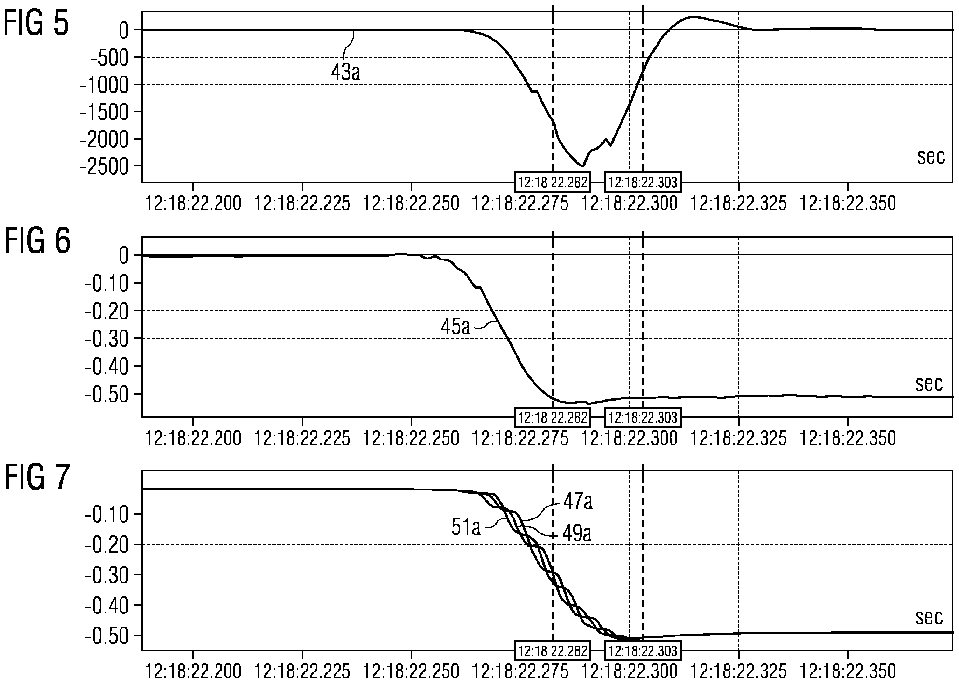

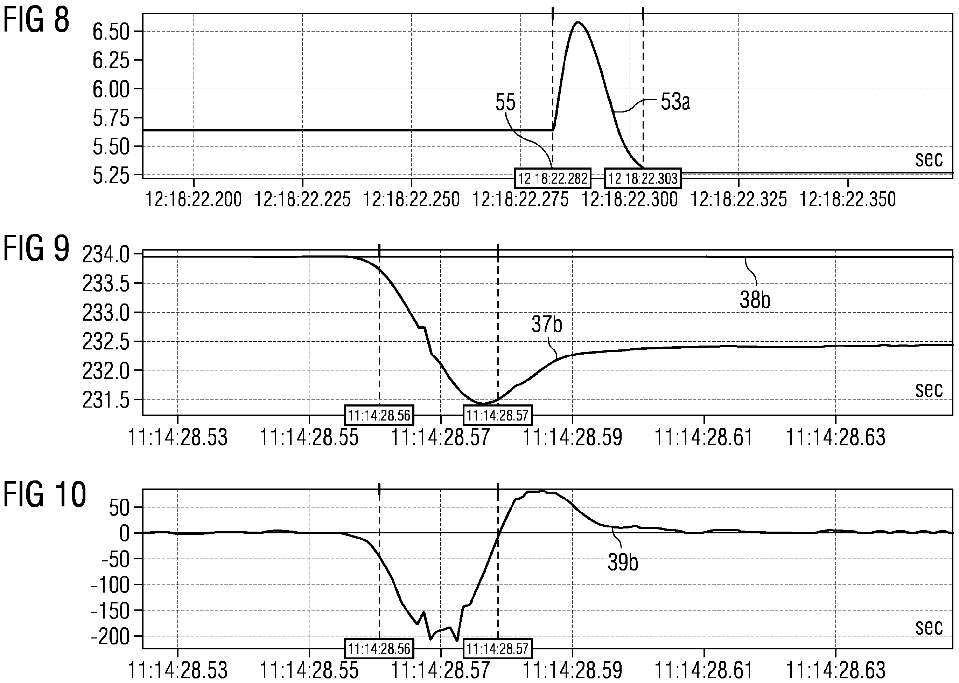

Die Kurven 37a, 37b, 37c in Fign. 2, 9 und 16 illustrieren dabei den Verlauf der Netzspannung 7. In Fign. 2, 9 und 16 ist ferner ein Sollwert 38a, 38b, 38c der Netzspannung eingezeichnet. Die Kurven 39a, 39b und 39c in Fign. 3, 10 bzw. 17 illustrieren die zeitliche Ableitung der Netzspannung. Die Kurven 41a, 41b, 41c in Fign. 4, 11 bzw. 18 illustrieren die Ausgabeleistung 15, insbesondere die Blindleistung. Die Kurven 43a, 43b, 43c in Fign. 5, 12 und 19 illustrieren die zeitliche Ableitung der von dem Blindleistungsgerät ausgegebenen Blindleistung. Die Kurven 45a, 45b, 45c illustrieren den Regelstrom in Fign. 6, 13 und 20. Die Kurven 47a, 49a, 51a, 47b, 49b, 51b und 47c, 49c und 51c illustrieren die Konverterströme der drei Phasen A, B und C in Fign. 7, 14 und 21. Schließlich illustrieren die Kurven 53a, 53b, 53c einen Systemfaktor in Fign. 8, 15 und 22.

Aufgrund eines Netzspannungsanstiegs in Fign. 2, 3 reagiert das System mit dem Ausgeben von weniger Blindleistung gemäß Fign. 4 und 5. Bei dem stärksten Abfall der Änderung der Netzspannung zu einem Zeitpunkt 55 steigt der Systemfaktor der Kurve 53a stark an, erreicht ein Maximum und fällt wieder ab, sobald die Spannungsänderung wieder unterhalb eines Schwellwertes liegt.

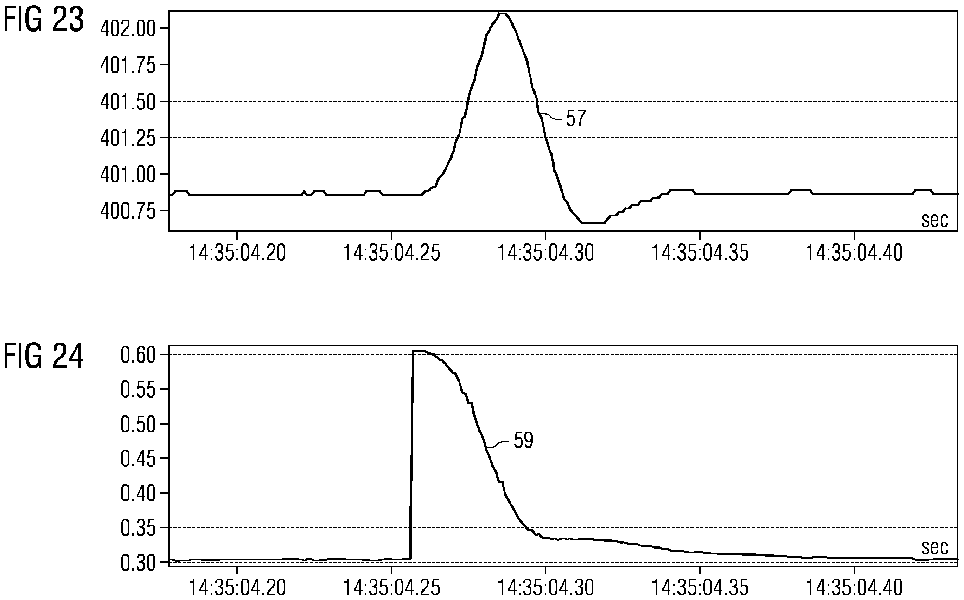

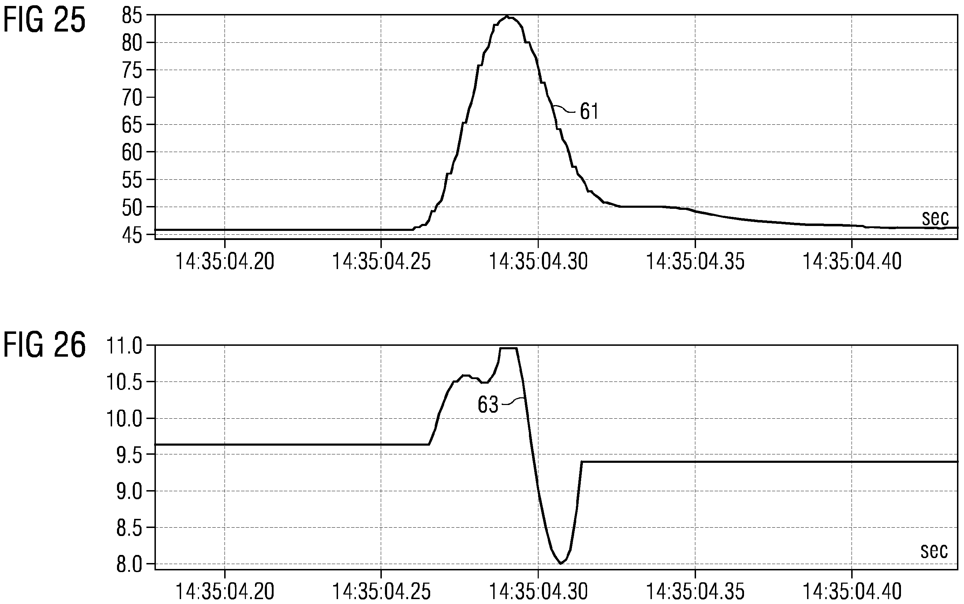

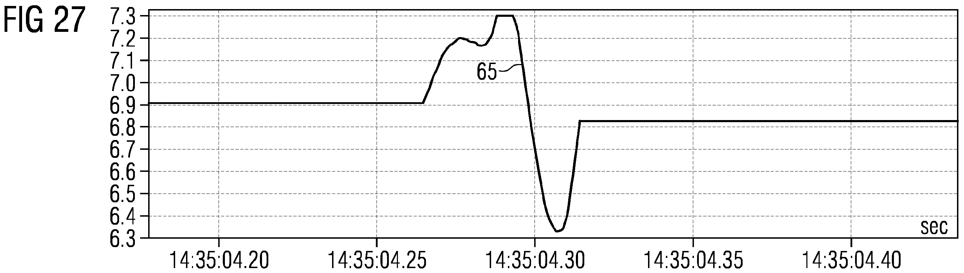

Fign. 23, 24, 25, 26 und 27 illustrieren ferner Kurven 57, 59, 61, 63, 65, welche die Netzspannung, den Regelungsstrom, die Blindleistung, SCL bzw. eine Verstärkung illustrieren, wie sie gemäß Ausführungsformen der vorliegenden Erfindung betrachtet, gemessen bzw. eingestellt werden.

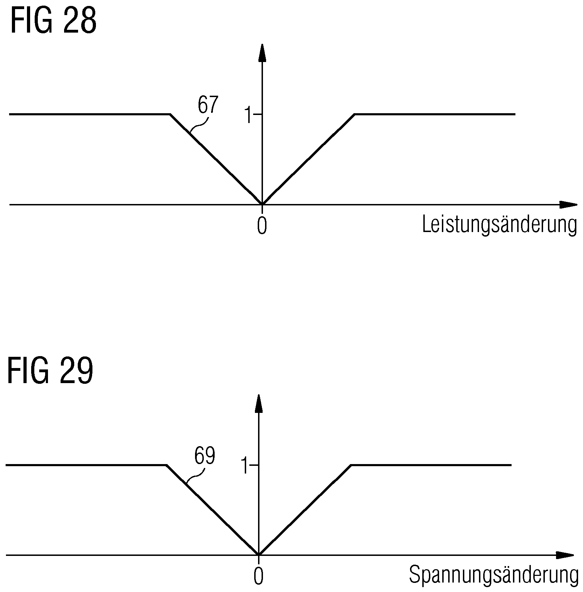

Fign. 28 und 29 illustrieren Kurven 67 bzw. 69, welche das zeitliche Verhalten der Ausgabeleistung bzw. das zeitliche Verhalten der Netzspannung illustrieren. Die Abszisse in Fig. 28 stellt den Wert der Änderung der Blindleistung und in Fig. 29 die Änderung der Spannung dar. Wenn eine gleichsinnige Änderung sowohl der ausgegebenen Leistung als auch der Netzspannung beobachtet wird, so kann geschlossen werden, dass die Regelungsanlage selbst die Spannungsänderung im Netz verursacht. Dies gleichsinnige Verhalten liegt vor, wenn z.B. gleichzeitig die Spannung sinkt und die Leistung sinkt, oder wenn gleichzeitig die Spannung steigt und auch die Leistung steigt.

Nur wenn ein gleichsinniges Verhalten in diesem Sinne vorliegt, kann eine Kurzschlussleistung, welche aus einem Verhältnis von zeitlichen Änderungen sowohl der Netzspannung als auch der gegebenen Blindleistung errechnet wird, zur Berechnung eines Regelparameters herangezogen werden. Falls dies nicht der Fall ist, wird der Messwert verworfen und das zum letzten Zeitpunkt bestimmte Netzkurzschlussequivalent verwendet.

## Patentansprüche

**1.** Verfahren zum Regeln einer elektrischen Spannung eines Netzes (3) mittels eines Blindleistungsgeräts (9), das mit dem Netz (3) verbunden ist, wobei das Verfahren aufweist:

Bestimmen einer zeitlichen Änderung (ΔV_vorher) einer vorherigen Spannung (7) des Netzes (3);

Bestimmen einer zeitlichen Änderung ($\Delta$Q_vorher) einer von dem Blindleistungsgerät vorherig in das Netz abgegebenen Blindleistung (11); und nachfolgend:

Abgeben, von dem Blindleistungsgerät, einer Blindleistung (15) in das Netz (3), die in Abhängigkeit der zeitlichen Änderungen ($\Delta$Q_vorher, $\Delta$V_vorher) bestimmt ist, wobei insbesondere eine Geschwindigkeit der Regelung eingestellt ist, um andere im Netz befindliche Spannungsregler zu berücksichtigen, wobei die vorherige Kurzschlussleistung des Netzes in Abhängigkeit eines vorherigen Verhältnisses ($\Delta$Q_vorher/$\Delta$V_vorher), der vorherigen zeitlichen Änderungen der Spannung des Netzes und der vorherigen zeitlichen Änderung der von dem Blindleistungsgerät abgegebenen Blindleistung gemäß einer Bestimmungslogik bestimmt wird, die insbesondere aufgrund einer Simulation bestimmt bzw. verifiziert ist, wobei insbesondere Parameter der Bestimmungslogik über einen Bereich der Kurzschlussleistung, insbesondere von 50 MVA bis 20000 MVA im Wesentlichen konstant gehalten werden, wobei die Bestimmungslogik umfasst:

Wichten des vorherigen Verhältnisses ($\Delta$Q_vorher/$\Delta$V_vorher) relativ zu der weiter vorherigen Kurzschlussleistung umso höher, je größer zumindest einer der Beträge der zeitlichen Änderungen der vorherigen Spannung des Netzes und/oder der zeitlichen Änderung der von dem Blindleistungsgerät vorherig abgegebenen Blindleistung ist und/oder

Verwenden des vorherigen Verhältnisses oder des gewichteten vorherigen Verhältnisses zur Bestimmung der vorherigen Kurzschlussleistung, wenn ein Betrag der zeitlichen Änderungen der vorherigen Spannung des Netzes und/oder der zeitlichen Änderung der von dem Blindleistungsgerät vorherig abgegebenen Blindleistung größer als ein jeweiliger Schwellwert ($\Delta$Q0, $\Delta$V0) ist und/oder

wenn ein Vorzeichen der zeitlichen Änderung der vorherigen Spannung des Netzes und ein Vorzeichen der zeitlichen Änderung der von dem Blindleistungsgerät vorherig abgegebenen Blindleistung gleich sind, wobei die von dem Blindleistungsgerät abgegebene Blindleistung ansteigend gewertet wird, wenn ansteigende kapazitive Blindleistung eingespeist wird.

2. Verfahren gemäß Anspruch 1, wobei das Abgeben der von dem Blindleistungsgerät (9) nachfolgend abgegebenen Blindleistung (15) aufweist:

Einstellen mindestens eines Reglerparameters, insbesondere Reglerverstärkung, eines Reglers (23) des Blindleistungsgeräts in Abhängigkeit der zeitlichen Änderungen ($\Delta$Q_vorher, $\Delta$V_vorher), wobei der Regler (23) eine Abweichung (25) der vorherigen Spannung (7) des Netzes von einem Sollwert (27) als Eingabe erhält;

Ausgeben, von dem Regler (23), eines Stellwertes (29) der Blindleistung an einen Konverter (31) des Blindleistungsgeräts, insbesondere Blindleistungskompensationsanlage;

Erzeugen der Blindleistung (15) durch den Konverter (31) und Einspeisen in das Netz.

3. Verfahren gemäß einem der vorangehenden Ansprüche, wobei das Einstellen mindestens eines Reglerparameters aufweist:

Bestimmen einer vorherigen Kurzschlussleistung des Netzes in Abhängigkeit der zeitlichen Änderungen ($\Delta$Q_vorher, $\Delta$V_vorher); und

Bestimmen des Reglerparameters basierend auf der bestimmten vorherigen Kurzschlussleistung und insbesondere unter Berücksichtigung des Einflusses anderer im Netz aktiver Spannungsregler.

4. Verfahren gemäß einem der vorangehenden Ansprüche, wobei die vorherige Kurzschlussleistung des Netzes in Abhängigkeit eines jeweiligen Betrages und/oder eines Vorzeichens der vorherigen zeitlichen Änderungen ($\Delta$V_vorher) der Spannung (7) des Netzes (3) und der vorherigen zeitlichen Änderung ($\Delta$Q_vorher) der von dem Blindleistungsgerät abgegebenen Blindleistung (11) und insbesondere basierend auf einer weiter vorherig bestimmten Kurzschlussleistung des Netzes bestimmt wird.

5. Verfahren gemäß einem der vorangehenden Ansprüche, wobei die vorherige Kurzschlussleistung KSL_vorher bestimmt ist, wenn $\Delta$Q/$\Delta$V > 0 ist, gemäß:

```
KSL_vorher = ((1 - w) * KSL_weiter-vorher + w *
ΔQ_vorher/ΔV_vorher)/2
```

wobei:

ΔV_vorher die Änderung der vorherigen Spannung des Netzes ΔQ_vorher die zeitliche Änderung der von dem Blindleistungsgerät vorherig abgegebenen Blindleistung KSL_vorher die vorherige Kurzschlussleistung des Netzes KSL_weiter-vorher die weiter vorherige Kurzschlussleistung des Netzes und
w ein Gewichtungsfaktor zwischen null und eins ist.

6. Verfahren gemäß einem der vorangehenden Ansprüche, wobei ΔQ0, ΔV0 Schwellwerte sind und sind und
w = 0 ist, falls ΔV < ΔV0 und/oder ΔQ < ΔQ0
w = 1 ist, falls ΔV >= ΔV0 und/oder ΔQ >= ΔQ0
oder
wobei w proportional zu (ΔQ - ΔQ0) ist.

7. Verfahren gemäß einem der vorangehenden Ansprüche, wobei die zeitlichen Änderungen in einem Zeitintervall bestimmt werden, das zwischen 100 μs und 10 ms, insbesondere zwischen 500 μs und 5 ms, liegt,

wobei das Verfahren zyklisch wiederholt wird,
wobei der Konverter (31) einen switchmode voltage converter umfasst.

8. Vorrichtung (1) zum Regeln einer elektrischen Spannung eines Netzes (3), wobei die Vorrichtung aufweist:

eine Steuerung (5), die ausgebildet ist, eine zeitliche Änderung (ΔV_vorher) einer vorherigen Spannung (7) des Netzes zu bestimmen und eine zeitliche Änderung (ΔQ_vorher) einer von dem Blindleistungsgerät vorherig in das Netz abgegebenen Blindleistung (11) zu bestimmen; und
ein Blindleistungsgerät, das mit dem Netz verbindbar ist und ausgebildet ist, eine Blindleistung in das Netz abzugeben, die in Abhängigkeit der zeitlichen Änderungen bestimmt ist, und wobei die Vorrichtung zum Durchführen des Verfahrens nach Anspruch 1 eingerichtet ist.

## Claims

1. Method for controlling a voltage of a grid (3) by means of a reactive power device (9) which is connected to the grid (3), wherein the method comprises:

determination of a change over time (ΔV_previous) in a previous voltage (7) of the grid (3);
determination of a change over time (ΔQ_previous) in a reactive power (11) previously output into the grid by the reactive power device; and thereafter:

outputting of a reactive power (15) into the grid (3) by the reactive power device, which reactive power is determined in accordance with the changes over time (ΔQ_previous, ΔV_previous),
wherein, in particular, a speed of the control is set in consideration of other voltage controllers which are present in the grid, wherein the previous short-circuit power of the grid is determined in accordance with a previous relationship (ΔQ_previous/ΔV_ previous), the previous changes over time in the grid voltage and the previous change over time in the reactive power output by the reactive power device, by the application of a determination logic which is determined or verified particularly on the basis of a simulation, wherein, in particular, parameters of the determination logic are essentially kept constant over a short-circuit power range, particularly from 50 MVA to 20 000 MVA, wherein the determination logic comprises:
weighting of the previous relationship (ΔQ_previous/ΔV_previous) relative to the further previous short-circuit power which is higher, the greater at least one of the magnitudes of the changes over time in the previous grid voltage and/or of the change over time in the reactive power previously output by the reactive power device,
and/or
employment of the previous relationship or the weighted previous relationship for the determination of the previous short-circuit power,
if a magnitude of the changes over time in the previous grid voltage and/or of the change over time in the reactive power previously output by the reactive power device exceeds a respective threshold value (ΔQ0, ΔV0) and/or
if a symbol of the change over time in the previous grid voltage and a symbol of the change over time in the reactive power previously output by the reactive power device are the same, wherein the reactive power output by the reactive power device is subject to a rising valuation when increasing capacitive reactive power is fed in.

2. Method according to Claim 1, wherein the outputting of the reactive power (15) which is output thereafter by the reactive power device (9) comprises:

setting of at least one controller parameter, particularly a controller amplification, of a controller (23) of the reactive power device in accordance with the changes over time ($\Delta Q\_previous$, $\Delta V\_previous$), wherein the controller (23) receives a deviation (25) of the previous grid voltage (7) from a target value (27) as an input; outputting, by the controller (23), of a control value (29) for the reactive power to a converter (31) of the reactive power device, particularly a reactive power compensation installation; generation of the reactive power (15) by the converter (31) and feeding into the grid.

3. Method according to either of the preceding claims, wherein the setting of at least one controller parameter comprises:

determination of a previous short-circuit power of the grid, in accordance with the changes over time ($\Delta Q\_previous$, $\Delta V\_previous$); and determination of the controller parameter on the basis of the previous short-circuit power determined, and particularly in consideration of the influence of other voltage controllers which are active in the grid.

4. Method according to one of the preceding claims, wherein the previous short-circuit power of the grid is determined in accordance with a respective magnitude and/or a symbol of the previous changes over time ($\Delta V\_previous$) in the voltage (7) of the grid (3) and the previous change over time ($\Delta Q\_previous$) in the reactive power (11) output by the reactive power device, and particularly on the basis of a further previously determined short-circuit power of the grid.

5. Method according to one of the preceding claims, wherein the previous short-circuit power KSL_previous, where $\Delta Q/\Delta V > 0$, is determined as follows:

```
KSL_previous  =  ((1  -  w)  *  KSL_further-previous  +  w  *
ΔQ_previous/ΔV_previous)/2
```

where:

$\Delta V\_previous$ is the change in the previous voltage of the grid $\Delta Q\_previous$ is the change over time in the reactive power previously output by the reactive power device KSL_previous is the previous short-circuit power of the grid KSL_further-previous is the further previous short-circuit power of the grid, and w is a weighting factor between zero and one.

6. Method according to one of the preceding claims, wherein $\Delta Q0$, $\Delta V0$ are threshold values, and
w = 0, where $\Delta V < \Delta V0$ and/or $\Delta Q < \Delta Q0$
w = 1, where $\Delta V >= \Delta V0$ and/or $\Delta Q >= \Delta Q0$
or
where w is proportional to ($\Delta Q - \Delta Q0$).

7. Method according to one of the preceding claims, wherein the changes over time are determined in a time interval which lies between 100 $\mu$s and 10 ms, particularly between 500 $\mu$s and 5 ms,

wherein the method is repeated cyclically,
wherein the converter (31) comprises a switch mode voltage converter.

8. Device (1) for controlling a voltage of a grid (3), wherein the device comprises:

a controller (5), which is designed to determine a change over time ($\Delta V\_previous$) in a previous voltage (7) of the grid, and to determine a change over time (LQ_previous) in a reactive power (11) previously output into the grid by the reactive power device; and

a reactive power device, which is connectable to the grid and is designed to output a reactive power into the grid, which reactive power is determined in accordance with the changes over time, and wherein the device is configured to carry out the method according to Claim 1.

**Revendications**

1. Procédé de régulation d'une tension électrique d'un réseau (3) au moyen d'un appareil (9) à puissance réactive, qui est connecté au réseau (3), procédé dans lequel :

   on détermine une variation ($\Delta$V_vorher) en fonction du temps d'une tension (7) précédente du réseau (3) ;
   on détermine une variation ($\Delta$Q_vorher) en fonction du temps d'une puissance (11) réactive cédée précédemment par l'appareil à puissance réactive au réseau ; et ensuite :
   on cède, par l'appareil à puissance réactive, une puissance (15) réactive au réseau (3), qui est déterminée en fonction des variations ($\Delta$Q_vorher, $\Delta$V_vorher) en fonction du temps, dans lequel notamment une vitesse de la régulation est réglée pour prendre en compte d'autres régulateurs de tension se trouvant dans le réseau, dans lequel on détermine la puissance de court-circuit précédente du réseau en fonction d'un rapport ($\Delta$Q_vorher / $\Delta$V_vorher) précédent, des variations précédentes en fonction du temps de la tension du réseau et de la variation précédente en fonction du temps de la puissance réactive cédée par l'appareil à puissance réactive suivant une logique de détermination, qui est déterminée ou vérifiée, notamment sur la base d'une simulation, dans lequel on maintient sensiblement constants des paramètres de la logique de détermination sur une plage de la puissance de court-circuit, allant notamment de 50 MVA à 20 000 MVA, la logique de détermination comprenant :

   une pondération du rapport ($\Delta$Q_vorher / $\Delta$V_vorher) précédent, par rapport à l'autre puissance de court-circuit précédente, d'autant plus grande qu'est plus grande au moins l'une des contributions des variations en fonction du temps de la tension précédente du réseau et/ou de la variation en fonction du temps de la puissance réactive cédée précédemment par l'appareil à puissance réactive et/ou
   l'utilisation du rapport précédent ou du rapport précédent pondéré pour la détermination de la puissance de court-circuit précédente,
   si une contribution des variations en fonction du temps de la tension précédente du réseau et/ou de la variation en fonction du temps de la puissance réactive cédée précédemment par l'appareil à puissance réactive est plus grande qu'une valeur ($\Delta$Q0, $\Delta$V0) de seuil respective et/ou
   si un signe de la variation en fonction du temps de la tension précédente du réseau et un signe de la variation en fonction du temps de la puissance réactive cédée précédemment par l'appareil à puissance réactive sont le même, dans lequel on évalue de manière croissante la puissance réactive cédée par l'appareil à puissance réactive, si on injecte de la puissance réactive capacitive croissante.

2. Procédé suivant la revendication 1, dans lequel la cession de la puissance (15) réactive cédée ensuite par l'appareil (9) à puissance réactive comporte :

   le réglage d'au moins un paramètre de régulateur, notamment une amplification de régulateur d'un régulateur (23) de l'appareil à puissance réactive en fonction des variations ($\Delta$Q_vorher, $\Delta$V_vorher) en fonction du temps, le régulateur (23) recevant comme entrée un écart (25) de la tension (7) précédente du réseau à une valeur (27) de consigne ;
   l'envoi par le régulateur (23) d'une valeur (29) de réglage de la puissance réactive à un convertisseur (31) de l'appareil à puissance réactive, notamment à une installation de compensation de puissance réactive ;
   la production de la puissance (15) réactive par le convertisseur (31) et l'injection dans le réseau.

3. Procédé suivant l'une des revendications précédentes, dans lequel le réglage d'au moins un paramètre de régulateur comporte :

   la détermination d'une puissance de court-circuit précédente du réseau en fonction des variations ($\Delta$Q_vorher, $\Delta$V_vorher) en fonction du temps ; et
   la détermination du paramètre du régulateur sur la base de la puissance de court-circuit précédente déterminée et en tenant compte notamment de l'influence d'autres régulateurs de tension actifs dans le réseau.

4. Procédé suivant l'une des revendications précédentes, dans lequel on détermine la puissance de court-circuit précédente du réseau, en fonction d'une contribution respective et/ou d'un signe des variations ($\Delta$V_vorher) précédentes en fonction du temps de la tension (7) du réseau (3) et de la variation ($\Delta$Q_vorher) précédente en fonction du temps de la puissance (11) réactive cédée par l'appareil à puissance réactive, et notamment sur la base d'une autre puissance de court-circuit déterminée auparavant du réseau.

**5.** Procédé suivant l'une des revendications précédentes, dans lequel la puissance KSL_vorher de court-circuit précédente est déterminée, si $\Delta$Q/$\Delta$V > 0, suivant :

```
KSL_vorher = ((1 - w) * KSL_weiter-vorher + w * ΔQ_vohrer /
ΔV_vorher) / 2
```

dans laquelle

$\Delta$V_vorher est la variation de la tension précédente du réseau, $\Delta$Q_vohrer est la variation en fonction du temps de la puissance réactive cédée précédemment par l'appareil à puissance réactive, KSL_vorher est la puissance de court-circuit précédente du réseau, KSL_weiter-vorher est l'autre puissance de court-circuit précédente du réseau et
w est un facteur de pondération compris entre zéro et un.

**6.** Procédé suivant l'une des revendications précédentes, dans lequel $\Delta$Q0, $\Delta$V0 sont des valeurs de seuil et

```
w = 0, si ΔV < ΔV0 et/ou ΔQ < ΔQ0
```

```
w = 1 si ΔV >= ΔV0 et/ou ΔQ >= ΔQ0
```

ou
dans lequel w est proportionnel à ($\Delta$Q -$\Delta$Q0).

**7.** Procédé suivant l'une des revendications précédentes, dans lequel on détermine les variations en fonction du temps dans un intervalle de temps, qui est compris entre 100 $\mu$s et 10 ms, notamment entre 500 $\mu$s et 5 ms,

dans lequel on répète le procédé cycliquement,
dans lequel le convertisseur (31) est un convertisseur de tension à mode de commutation.

**8.** Montage (1) de régulation d'une tension électrique d'un réseau (3), dans lequel le montage comprend :

une commande (5), qui est constituée pour déterminer une variation ($\Delta$V_vorher) en fonction du temps d'une tension (7) précédente du réseau et pour déterminer une variation ($\Delta$Q_vohrer) en fonction du temps d'une puissance (11) réactive cédée précédemment au réseau par l'appareil à puissance réactive ; et
un appareil à puissance réactive, qui peut être connecté au réseau et qui est constitué pour céder au réseau une puissance réactive, qui est déterminée en fonction d'une variation en fonction du temps, et dans lequel le montage est conçu pour effectuer le procédé suivant la revendication 1.

FIG 1

FIG 2

FIG 3

FIG 4

FIG 5

FIG 6

FIG 7

FIG 8

FIG 9

FIG 10

EP 3 741 022 B1

EP 3 741 022 B1

FIG 11

FIG 12

FIG 13

FIG 14

FIG 15

FIG 16

FIG 17

FIG 18

FIG 19

EP 3 741 022 B1

FIG 20

FIG 21

FIG 22

EP 3 741 022 B1

FIG 23

FIG 24

FIG 25

FIG 26

EP 3 741 022 B1

EP 3 741 022 B1

FIG 27

FIG 28

67   1

0   Leistungsänderung

FIG 29

69   1

0   Spannungsänderung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4897593 A